# EUROPÄISCHE PATENTSCHRIFT

(11) **EP 3 205 090 B1**
(45) Veröffentlichungstag und Bekanntmachung des Hinweises auf die Patenterteilung: **14.06.2023**
(21) Anmeldenummer: 15794065.1
(22) Anmeldetag: 15.09.2015
(51) Int. Cl.: H04N 13/20, H04N 13/239, G02B 13/06, H04N 13/25, H04N 13/296

(54) **STEREOKAMERA FÜR FAHRZEUGE**
STEREO CAMERA FOR VEHICLES
CAMÉRA STÉRÉO POUR VÉHICULES

(30) Priorität: 10.10.2014 DE 102014220585
(43) Veröffentlichungstag der Anmeldung: 16.08.2017
(73) Patentinhaber: Continental Autonomous Mobility Germany GmbH, 85057 Ingolstadt (DE)
(72) Erfinder: ADOMAT, Rolf, 88097 Eriskirch (DE); FECHNER, Thomas, 88142 Wasserburg (DE); KRÖKEL, Dieter, 88097 Eriskirch (DE); MÜLLER, Gerhard, 88339 Bad Waldsee (DE); PUNKE, Martin, 88138 Hergensweiler (DE)
(74) Vertreter: Continental Corporation
(86) Internationale Anmeldenummer: PCT/DE2015/200457
(87) Internationale Veröffentlichungsnummer: WO 2016/055060

(56) Entgegenhaltungen:
- DE-A1-102004 061 998
- US-B2- 8 305 431
- Stefan K Gehrig: "Large-Field-of-View Stereo for Automotive Applications", , 1. Oktober 2005 (2005-10-01), XP055245745, OMNIVIS05, Beijing Gefunden im Internet: URL:http://www.fieldrobotics.org/~cgeyer/O MNIVIS05/final/Gehrig.pdf [gefunden am 2016-01-28]
- FENG WEIJIA ET AL: "A general model and calibration method for spherical stereoscopic vision", INTELLIGENT ROBOTS AND COMPUTER VISION XXIX: ALGORITHMS AND TECHNIQUES, SPIE, 1000 20TH ST. BELLINGHAM WA 98225-6705 USA, Bd. 8301, Nr. 1, 22. Januar 2012 (2012-01-22), Seiten 1-8, XP060000647, DOI: 10.1117/12.907071 [gefunden am 2012-01-23]
- Simon Thibault: "Panomorph Based Panoramic Vision Sensors" In: "Vision Sensors and Edge Detection", 1. August 2010 (2010-08-01), Sciyo, XP055218910, ISBN: 978-953-30-7098-8 Seiten 1-28, DOI: 10.5772/56692, in der Anmeldung erwähnt Zusammenfassung

## Beschreibung

Die Erfindung betrifft eine Stereokamera für ein Fahrzeug mit einer einen ersten Bildsensor aufweisenden ersten Kamera und einer einen zweiten Bildsensor aufweisenden zweiten Kamera gemäß dem Oberbegriff des Patentanspruchs 1. Ferner betrifft die Erfindung ein Verfahren zur Belichtungssteuerung einer solchen Stereokamera.

Zur Realisierung von Fahrerassistenzsystemen, wie bspw. einer Verkehrszeichenerkennung oder eines Spurhalteassistenten werden Kamerasysteme, insbesondere Stereokameras zur verbesserten Tiefenauflösung eingesetzt. Unter einer Stereokamera werden zwei Kameras mit jeweils einer Linsenoptik und einem Bildsensor verstanden, die in einem vorgegebenen Abstand versetzt zueinander bspw. an einer Windschutzscheibe des Fahrzeugs angebracht sind. Stereokameras bieten den Vorteil, dass mit ihnen Entfernungen gemessen werden können.

Zur Realisierung der oben genannten Fahrerassistenzfunktionen benötigen Kamerasysteme einen horizontalen Öffnungswinkel von ca. 50° und einen vertikalen Öffnungswinkel von ca. 30°. Zukünftige Kamerasysteme erfordern für neue Funktionen wie Querverkehrserkennung oder Ampelerkennung einen deutlich höheren Öffnungswinkel.

Kamerasysteme mit hoher Auflösung und gleichzeitig großem Öffnungswinkel erfordern Bildsensoren mit hoher Pixelanzahl von mehreren Megapixeln, wie sie bereits für die digitale Bildfotografie üblich sind. Solche Bildsensoren sind jedoch für den automobiltechnischen Einsatz ungeeignet, weil sie zum einen wegen der geringen Pixelgröße zu unempfindlich sind und zum anderen eine effiziente Verarbeitung der großen Pixelanzahl für die aufwendigen Bildverarbeitungsalgorithmen nicht zulassen.

In diesem technischen Zusammenhang beschreibt die gattungsbildende US 83 05 431 B1 zur Realisierung einer Multifunktionalität eine Stereokamera für ein Fahrzeug mit einer ersten und zweiten Kamera, die jedoch unterschiedliche und sich überlappende Kamerasichtfelder (Field of View, FOV) aufweisen. Eine dieser Kameras ist als Schwarzweißkamera und die andere als Farbkamera ausgebildet, wobei die Schwarzweißkamera einen Öffnungswinkel zwischen 30° und 50°, vorzugsweise 40° aufweist, während die Farbkamera einen Öffnungswinkel zwischen 15° und 25°, vorzugsweise 20° aufweist. Für beide Kameras werden identische Bildsensoren, vor allem hinsichtlich ihrer Auflösung vorgeschlagen.

Ein ähnliches System einer Stereokamera beschreibt auch die DE 10 2004 061998 A1, die eine Schwarzweißkamera mit einem Öffnungswinkel von ebenso 40° und eine Farbkamera mit einem Öffnungswinkel von 70° umfasst. Die Schwarzweißkamera besitzt einen Grauwertbildsensor mit einer hohen Lichtempfindlichkeit und einer Pixelgröße von 8 µm bei einer horizontalen geometrischen Auflösung von 800 Pixeln. Die Farbkamera ist mit einem hochauflösenden Farbbildsensor mit einer Pixelgröße von 4 µm bei einer horizontalen geometrischen Auflösung von 1600 Pixeln ausgestattet. Der Einsatz eines solchen hochauflösenden Farbbildsensors widerspricht jedoch einer kostengünstigen Realisierung von Fahrerassistenzfunktionen.

Ferner ist aus der US 2013/0120538 A1 Stereokamera bekannt, deren beiden Kameras mit unterschiedlichen Bildsensoren hinsichtlich der Pixelanzahl ausgestattet sind. Ferner sind jeder Kamera Linsensysteme zur Einstellung von deren Kamerasichtfeldern zugeordnet. So führt das eine Linsensystem zu einem Öffnungswinkel von 55° und das andere Linsensystem zu einem Öffnungswinkel von 80°.

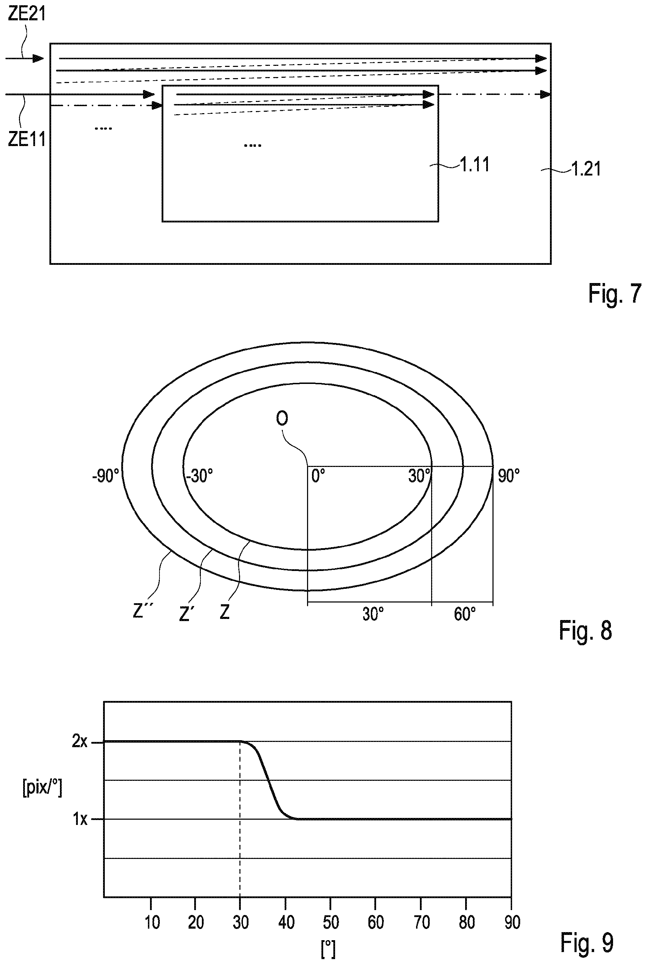

Simon Thibault (2010) beschreibt in "Panomorph Based Panoramic Vision Sensors, Vision Sensors and Edge Detection, Francisco Gallegos-Funes (Ed.), ISBN: 978-953-307-098-8, InTech, eine sogenannte "panomorphe Optik" mit einer erhöhten Auflösung in vorbestimmten Zonen des Kamerasichtfeldes des zugehörigen Bildsensors, die ein besonderen Typ von panoramischen Linsen darstellt. Diese sind gekennzeichnet durch zwei Parameter, nämlich dem Betrag und Lage der Auflösung innerhalb des panoramischen Kamerasichtfeldes. Für solche panomorphe Linsen stellt die Auflösung ein Designparameter dar, um eine hochauflösende vorbestimmte Zone zu realisieren, d. h. das Kamerasichtfeld wird in unterschiedliche Zonen unterteilt, die unterschiedliche Auflösungen aufweisen. So wird eine panomorphe Linse beschrieben, deren zentrale Zone im Vergleich zur Peripherie die doppelte Auflösung aufweist, wie anhand der Figuren 8 und 9 erläutert wird.

Die Figur 8 zeigt ein Kamerasichtfenster mit einem Öffnungswinkel von +/- 90° um eine optische Achse O mit einem hochauflösenden Zentralbereich Z entsprechend einem Öffnungswinkel von +/- 30° und peripheren Zonen Z' und Z" mit einer niedrigeren Auflösung. Die Figur 9 zeigt den Graph der Auflösung in Abhängigkeit des Öffnungswinkels, wobei der Zentralbereich Z die doppelte Auflösung aufweist als der außerhalb des Zentralbereichs liegende Bereich Z". Diese Figuren 8 und 9 zeigen auch einen Übergangsbereich Z` zwischen dem Zentralbereich Z und dem Bereich Z", der über einen Winkelbereich von 10° verläuft.

Der Autor des oben genannten Artikels erläutert ferner die Anwendung eines Bildsensors mit einer panomorphen Linse zur Bereitstellung der notwendigen Bildinformationen für ein Fahrerassistenzsystem.

Ausgehend von diesem Stand der Technik ist es Aufgabe der Erfindung, eine Stereokamera der eingangs genannten Art zu schaffen, die kostengünstig realisierbar ist und gleichzeitig alle Anforderungen hinsichtlich einer erhöhten Auflösung zur Realisierung von Fahrerassistenzsystemen erfüllt. Ferner ist es Aufgabe der Erfindung, ein Verfahren zur Belichtungssteuerung einer solchen Stereokamera anzugeben.

Die erstgenannte Aufgabe wird gelöst durch eine Stereokamera mit den Merkmalen des Patentanspruchs 1.

Eine solche Stereokamera für ein Fahrzeug mit einer einen ersten Bildsensor aufweisenden ersten Kamera, deren Kamerasichtfeld einen ersten Öffnungswinkel aufweist, und einer einen zweiten Bildsensor aufweisenden zweiten Kamera, deren Kamerasichtfeld einen zweiten Öffnungswinkel aufweist, wobei der zweite Öffnungswinkel größer ist als der erste Öffnungswinkel, zeichnet sich erfindungsgemäß dadurch aus, dass
- die erste Kamera eine erste Linsenoptik und die zweite Kamera eine zweite Linsenoptik aufweist, wobei sowohl die erste als auch die zweite Linsenoptik mit einer im Winkelbereich um die optische Achse liegenden Zentralbereich des Kamerasichtfeldes höheren Winkelauflösung ausgebildet ist als außerhalb des Zentralbereichs, und
- die erste und zweite Kamera derart zueinander angeordnet sind, dass sich deren Kamerasichtfelder überlappen.

Diese erfindungsgemäße Stereokamera zeichnet sich dadurch aus, dass für beide Kameras eine Linsenoptik verwendet wird, die jeweils im Zentralbereich eine höhere Auflösung aufweist als außerhalb dieses Zentralbereiches. Eine solche Stereokamera ist kostengünstig zu realisieren, da die entsprechenden Linsensysteme als marktübliche Produkte, bspw. von der Firma ImmerVision erhältlich sind.

Aufgrund des Einsatzes von panomorhen Linsenoptiken ist der erste und der zweite Bildsensor mit identischen Pixeldichten ausgebildet, wobei die beiden Bildsensoren jeweils eine an den Öffnungswinkel angepasste Größe aufweisen. Entsprechend des größeren Öffnungswinkels weist auch der zugehörige Bildsensor gegenüber dem Bildsensor der Kamera mit dem kleineren Kamerasichtfeld eine größere Fläche auf.

Besonders vorteilhaft ist es gemäß einer weiteren Ausgestaltung der Erfindung, wenn die erste und zweite Linsenoptik jeweils im Zentralbereich mit einer gegenüber außerhalb des Zentralbereichs doppelten Auflösung ausgebildet ist.

Die zweitgenannte Aufgabe wird gelöst durch ein Verfahren mit den Merkmalen des Patentanspruchs 3.

Die erfindungsgemäße Lösung des Verfahrens zeichnet sich dadurch aus, dass
- für die erste Kamera eine erste Linsenoptik und für die zweite Kamera eine zweite Linsenoptik bereitgestellt wird, wobei sowohl die erste als auch die zweite Linsenoptik mit einer im Winkelbereich um die optische Achse liegenden Zentralbereich des Kamerasichtfeldes höheren Winkelauflösung ausgebildet wird als außerhalb des Zentralbereichs, und
- die erste und zweite Kamera derart zueinander angeordnet werden, dass sich deren Kamerasichtfelder hinsichtlich der optischen Achse symmetrisch überlappen,
- das Belichten und das Auslesen der Bildsensorpixel des ersten und zweiten Bildsensors zeilenweise durchgeführt wird, indem nach einem Belichtungsstart des größeren Bildsensors die Belichtung des kleineren Bildsensors beginnt, wenn bei dem größeren Bildsensor die erste Zeile des kleineren Bildsensors erreicht wird, wobei für den kleineren Bildsensor in horizontaler Richtung randseitig jeweils virtuelle Spalten bis zur Übereinstimmung mit der Spaltenzahl des größeren Bildsensor erzeugt werden.

Bei dieser drittgenannten erfindungsgemäßen Lösung wird das Kamerasichtfeld der einen Kamera gegenüber der anderen sowohl in horizontaler als auch in vertikaler Richtung erweitert, wobei zur Belichtungssteuerung die beiden Bildsensoren reihenweise belichtet und ausgelesen werden und zur Anpassung in horizontaler Richtung für den kleineren Bildsensor virtuelle Spalten erzeugt und eingefügt werden.

Die erfindungsgemäße Lösung zeichnet sich dadurch aus, dass
- für die erste Kamera eine erste Linsenoptik und für die zweite Kamera eine zweite Linsenoptik bereitgestellt wird, wobei sowohl die erste als auch die zweite Linsenoptik mit einer im Winkelbereich um die optische Achse liegenden Zentralbereich des Kamerasichtfeldes höheren Winkelauflösung ausgebildet wird als außerhalb des Zentralbereichs, und
- die erste und zweite Kamera derart zueinander angeordnet werden, dass sich deren Kamerasichtfelder hinsichtlich der optischen Achse symmetrisch überlappen,
- das Belichten und das Auslesen der Bildsensorpixel des ersten und zweiten Bildsensors zeilenweise durchgeführt wird, indem nach einem Belichtungsstart des größeren Bildsensors die Belichtung des kleineren Bildsensors beginnt, wenn bei dem größeren Bildsensor die erste Zeile des kleineren Bildsensors erreicht wird.

Bei dieser genannten erfindungsgemäßen Lösung wird das Kamerasichtfeld der einen Kamera gegenüber der anderen lediglich in vertikaler Richtung erweitert, wobei zur Belichtungssteuerung die beiden Bildsensoren reihenweise belichtet und ausgelesen werden.

Alternativ wäre ein Verfahren zur Belichtungssteuerung einer Stereokamera für ein Fahrzeug denkbar mit einer einen ersten Bildsensor aufweisenden ersten Kamera, deren Kamerasichtfeld einen ersten Öffnungswinkel aufweist, und einer einen zweiten Bildsensor aufweisenden zweiten Kamera, deren Kamerasichtfeld einen zweiten Öffnungswinkel aufweist, wobei der zweite Öffnungswinkel in horizontaler Richtung größer ist als der erste Öffnungswinkel, zeigte sich gemäß der erstgenannten Lösung erfindungsgemäß dadurch aus, dass
- für die erste Kamera eine erste Linsenoptik und für die zweite Kamera eine zweite Linsenoptik bereitgestellt wird, wobei sowohl die erste als auch die zweite Linsenoptik mit einer im Winkelbereich um die optische Achse liegenden Zentralbereich des Kamerasichtfeldes höheren Winkelauflösung ausgebildet wird als außerhalb des Zentralbereichs, und
- die erste und zweite Kamera derart zueinander angeordnet werden, dass sich deren Kamerasichtfelder hinsichtlich der optischen Achse symmetrisch überlappen,
- das Belichten und das Auslesen der Bildsensorpixel des ersten und zweiten Bildsensors spaltenweise durchgeführt wird, indem nach einem Belichtungsstart des größeren Bildsensors die Belichtung des kleineren Bildsensors beginnt, wenn bei dem größeren Bildsensor die erste Spalte des kleineren Bildsensors erreicht wird.

Bei dieser genannten Alternative wird das Kamerasichtfeld der einen Kamera gegenüber der anderen lediglich in horizontaler Richtung erweitert, wobei zur Belichtungssteuerung die beiden Bildsensoren spaltenweise belichtet und ausgelesen werden.

Die erfindungsgemäße Stereokamera kann für Fahrerassistenzsysteme in Fahrzeugen eingesetzt werden.

Die erfindungsgemäße Stereokamera als auch das zugehörige erfindungsgemäße Verfahren zur Belichtungssteuerung einer solchen Stereokamera wird nachfolgend unter Bezugnahme auf die beigefügten Figuren näher erläutert. Es zeigen:
- Figur 1: eine schematische Darstellung einer erfindungsgemäßen Stereokamera im Bereich einer Windschutzscheibe eines Fahrzeugs,
- Figur 2: eine schematische Darstellung des konstruktiven Aufbaus der Stereokamera mit einer ersten und zweiten Kamera nach Figur 1,
- Figur 3: ein Diagramm mit dem Auflösungsverlauf der ersten Kamera der Stereokamera nach Figur 2 in Abhängigkeit des horizontalen Öffnungswinkels,
- Figur 4: ein Diagramm mit dem Auflösungsverlauf der zweiten Kamera der Stereokamera nach Figur 2 in Abhängigkeit des horizontalen Öffnungswinkels,
- Figur 5: eine schematische Darstellung des Belichtungsschemas der Bildsensoren der ersten und zweiten Kamera einer erfindungsgemäßen Stereokamera bei einer horizontalen Erweiterung des Öffnungswinkels der zweiten Kamera gegenüber der ersten Kamera,
- Figur 6: eine schematische Darstellung des Belichtungsschemas der Bildsensoren der ersten und zweiten Kamera einer erfindungsgemäßen Stereokamera bei einer vertikalen Erweiterung des Öffnungswinkels der zweiten Kamera gegenüber der ersten Kamera,
- Figur 7: eine schematische Darstellung des Belichtungsschemas der Bildsensoren der ersten und zweiten Kamera einer erfindungsgemäßen Stereokamera bei einer horizontalen und vertikalen Erweiterung des Öffnungswinkels der zweiten Kamera gegenüber der ersten Kamera,
- Figur 8: zeigt ein Kamerasichtfeld einer panomorphen Linse mit einem Zentralbereich von erhöhter Auflösung gegenüber dem peripheren Bereich, und
- Figur 9: ein Diagramm mit dem Auflösungsverlauf der panomorphen Linse nach Figur 8 in Abhängigkeit des horizontalen Öffnungswinkels.

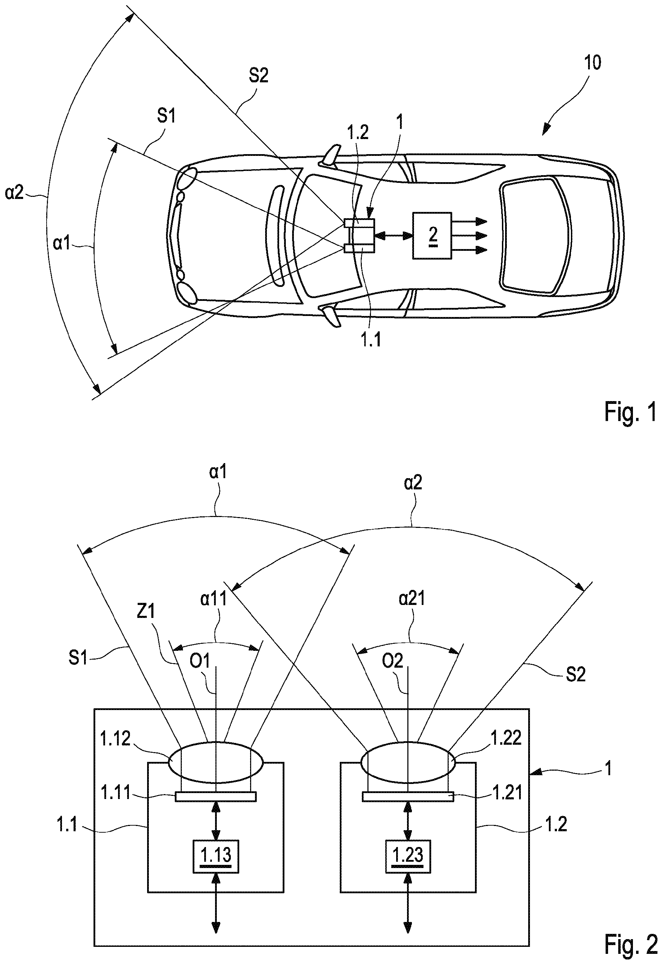

Das in Figur 1 dargestellte Fahrzeug 10 umfasst ein Fahrerassistenzsystem mit einer hinter einer Windschutzscheibe des Fahrzeugs 10 angeordneten Stereokamera 1 sowie einer Steuer- und Auswerteeinheit 2, wobei die Stereokamera 1 eine erste Kamera 1.1 und eine zweite Kamera 1.2 aufweist und in Fahrtrichtung gesehen die erste Kamera 1.1 eine linke Kamera und die zweite Kamera 1.2 eine rechte Kamera darstellt. Die Bilddaten der Stereokamera 1 werden von der Steuer- und Auswerteeinheit 2 ausgewertet. In Abhängigkeit des Auswerteergebnisses erfolgt die Ausführung einer Fahrerassistenzfunktion des Fahrerassistenzsystems.

Die linke Kamera 1.1 besitzt ein Kamerasichtfeld S1 mit einem horizontalen Öffnungswinkel α1, bspw. von 50°, während die rechte Kamera 1.2 ein Kamerasichtfeld S2 mit einem größeren horizontalen Öffnungswinkel α2, bspw. von 90° aufweist.

Den konstruktiven Aufbau der Stereokamera 1 mit der linken und rechten Kamera 1.1 und 1.2 zeigt Figur 2. Die linke Kamera 1.1 umfasst eine erste Linsenoptik 1.12 sowie einem dieser Linsenoptik 1.12 zugeordneten ersten Bildsensor 1.11, der von einer Bildauswerteeinheit 1.13 angesteuert wird. Die rechte Kamera 1.2 weist den identischen Aufbau auf und besteht aus einer zweiten Linsenoptik 1.22 mit einem zweiten Bildsensor 1.21, der von einer Bildauswerteeinheit 1.23 angesteuert wird.

Für die erste und zweite Linsenoptik 1.12 und 1.22 wird wenigstens eine panomorphe Linse mit Eigenschaften entsprechend den Figuren 8 und 9 eingesetzt, deren Eigenschaften bereits in der Beschreibungseinleitung erläutert wurde. Diese Linse gemäß Figur 8 weist einen die optische Achse O umgebenden Zentralbereich Z auf, in welchem diese Linse eine höhere Auflösung aufweist als die beiden den Zentralbereich ringförmig umgebenden Bereiche Z' und Z", die außerhalb dieses Zentralbereiches Z liegen. Diese Bereiche Z, Z' und Z" weisen eine elliptische Form auf, wobei der Zentralbereich Z einen horizontalen Öffnungswinkel von 60° aufweist und der gesamte Öffnungswinkel dieser Linse, die dem Kamerasichtfeld entspricht, einen Wert von 180° aufweist. Den Verlauf der Auflösung ausgehend von der optischen Achse O bis an den Randbereich zeigt die Figur 9, wonach die Auflösung in dem Zentralbereich Z, also bis zu dem Winkel von 30° doppelt so groß ist wie der Bereich größer einem Winkel von 40°, der dem Bereich Z" entspricht. Der der Winkelbereich von 30° bis 40° stellt einen Übergangsbereich zwischen dem Zentralbereich Z und dem äußersten Bereich Z" dar, in welchem die Auflösung stetig von dem höheren Wert in den niedrigeren Wert übergeht.

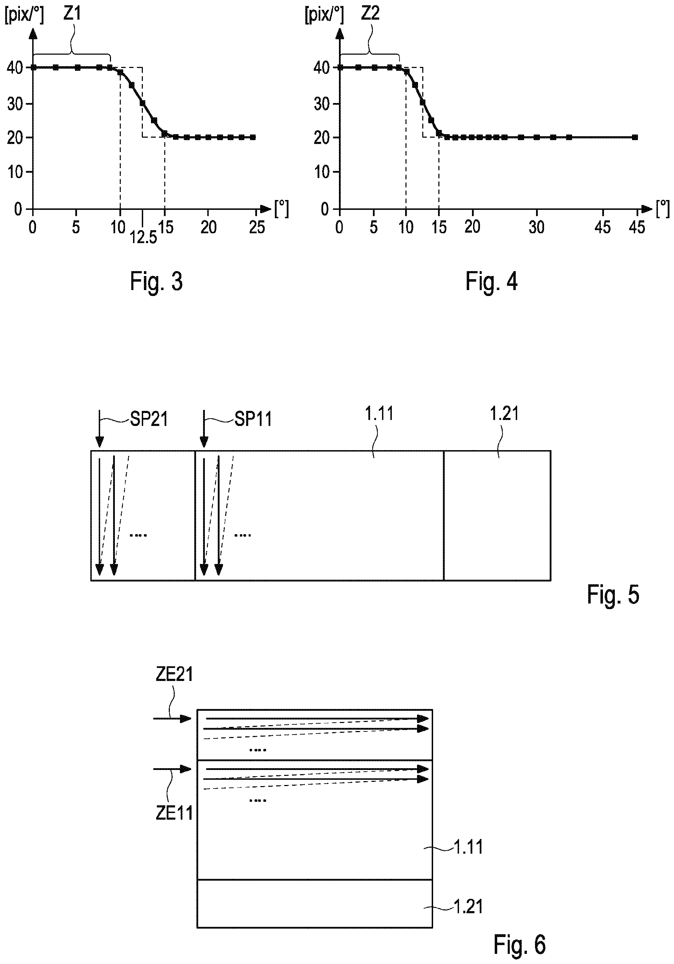

Auch die erste und zweite Linsenoptik 1.12 und 1.22 der linken und rechten Kamera 1.1 und 1 2 weisen eine entsprechende Eigenschaft auf, die in den Figuren 3 und 4 dargestellt ist. So weist gemäß Figur 2 die erste Linsenoptik 1.12 der linken Kamera 1.1 der Stereokamera 1 einen Zentralbereich Z1 mit einem Öffnungswinkel von α11 auf, während die zweite Linsenoptik 1.22 der rechten Kamera 1.2 der Stereokamera 1 einen Zentralbereich Z2 mit einem größeren Öffnungswinkel α21 aufweist. Diese beiden Zentralbereiche Z1 und Z2 können entsprechend von Figur 8 elliptisch oder auch rotationssymmetrisch, also kreisförmig ausgebildet sein. Entsprechend sind die sich um diese Zentralbereiche Z1 und Z2 sich anschließenden Bereiche ausgeführt.

Den Verlauf der horizontalen Auflösung über das Kamerasichtfenster S1 der linken Kamera 1.1 zeigt die Figur 3, den Verlauf der horizontalen Auflösung über das Kamerasichtfenster S2 der rechten Kamera 1.2 zeigt die Figur 4.

Gemäß Figur 3 beträgt der Öffnungswinkel α11 des Zentralbereiches Z1 der ersten Linsenoptik 1.12 der ersten Kamera 1.1 20°, in welchem die Auflösung konstant 40 pix/° beträgt. An diesen Zentralbereich Z1 schließt sich ein Winkelbereich von 5° als Übergangsbereich an, in welchem die Auflösung von 40 pix/° auf 20 pix/° abfällt und konstant bis an den Rand bei einem Winkelwert von 25°, entsprechend einem Öffnungswinkel von 50° bleibt. In diesem Zentralbereich Z1 mit einem relativ engen Öffnungswinkel von 20° liegt eine hohe Auflösung vor, die für eine Objekterkennung im Fernbereich erforderlich ist.

Gemäß Figur 4 beträgt der Öffnungswinkel α12 des Zentralbereiches Z2 der zweiten Linsenoptik 1.22 der zweiten Kamera 1.2 entsprechend der ersten Linsenoptik 1.12 ebenso 20°, in welchem die Auflösung auch konstant 40 pix/° beträgt. An diesen Zentralbereich Z2 schließt sich ein Winkelbereich von 5° als Übergangsbereich an, in welchem die Auflösung von 40 pix/° auf 20 pix/° abfällt und konstant bis an den Rand bei einem Wert von 45°, entsprechend einem Öffnungswinkel von 90° bleibt.

Bei einer solchen Stereokamera 1 mit den Eigenschaften gemäß den Figuren 3 und 4 lässt sich der Stereoeffekt bis zu einem Öffnungswinkel von 50° nutzen.

Die Bildsensoren 1.11 und 1.21 der linken und rechten Kamera 1.1 und 1.2 weisen unterschiedliche Größen auf, die jeweils an die Kamerasichtfelder S1 und S2 angepasst sind, jedoch jeweils die gleiche Pixeldichte aufweisen. Aufgrund des größeren Sichtfeldes S2 der rechten Kamera 1.2 im Vergleich zum Sichtfeld S1 der linken Kamera 1.1 ist der zweite Bildsensor 1.21 der rechten Kamera 1.2 in seiner horizontalen Ausdehnung größer als der erste Bildsensor 1.11 der linken Kamera 1.1. Dabei sind die beiden Kameras 1.1 und 1.2 derart zueinander ausgerichtet, dass sich die Kamerasichtfelder S1 und S2 symmetrisch überlappen, wie dies in Figur 5 dargestellt ist.

Der größere Bildsensor 1.21 müsste bei einer lediglich horizontalen Erweiterung des Öffnungswinkels α2 der rechten Kamera 1.2 auf 90° gegenüber einem Öffnungswinkel von 50° der linken Kamera 1.1 nur um etwa 50 % hinsichtlich der Pixelanzahl wachsen, obwohl der Öffnungswinkel nahezu verdoppelt wird.

Der Übergangsbereich vom hochauflösenden Zentralbereich Z1 bzw. Z2 in den niederauflösenden Bereich führt dazu, dass eine Rektifizierung der Bilder für die Errechnung eines Stereotiefenbildes erschwert wird. Um diese Schwierigkeit zu umgehen, ist es möglich, den Übergangsbereich so weit nach rechts zu verschieben, d.h. in Richtung höherer Winkelwerte, dass dieser Übergangsbereich nur noch in der rechten Kamera 1.2 mit dem größeren Öffnungswinkel α2 zum Tragen kommt.

Zur Erzielung einer hochgenauen Stereotiefenkarte ist die Synchronität beim Belichten und Auslesen der Bildsensorpixel der beiden Bildsensoren 1.11 und 1.21 sicherzustellen. Dies stellt kein Problem dar, wenn nach dem "Global-Shutter-Prinzip" arbeitende Bildsensoren verwendet werden, da alle Bildsensorpixel gleichzeitig belichtet und ausgelesen werden.

Es ist jedoch möglich, nach dem sogenannten "Rolling-Shutter-Prinzip" vorzugehen, indem die Synchronität bei den beiden Bildsensoren 1.11 und 1.21 dadurch erreicht wird, dass diese spaltenweise ausgelesen werden. Diese Vorgehensweise beschreibt Figur 5, wonach zunächst die erste Spalte SP21 des größeren Bildsensors 1.21 belichtet und ausgelesen wird und das Belichten und Auslesen des kleineren Bildsensors 1.11 erst gestartet wird, wenn der Belichtungsvorgang des größeren Bildsensors 1.21 die erste Spalte SP11 des kleineren Bildsensors 1.11 erreicht hat.

Mit den Figuren 1 bis 4 wird eine Stereokamera 1 mit einer linken und rechten Kamera 1.1 und 1.2 beschrieben, bei welcher der Öffnungswinkel α2 der rechten Kamera 1.2 gegenüber dem Öffnungswinkel α1 der linken Kamera 1.1 in horizontaler Richtung erweitert ist. Entsprechend ist es auch möglich, den Öffnungswinkel der rechten Kamera 1.2 gegenüber dem Öffnungswinkel der linken Kamera 1.1 in vertikaler Richtung zu erweitern. Auch für diesen Fall weisen die beiden Linsenoptiken 1.12 und 1.21 der linken und rechten Kamera 1.1 und 1.2 die im Zusammenhang mit den Figuren 3 und 4 beschriebenen Eigenschaften auf. Dabei sind die beiden Kameras 1.1 und 1.2 derart zueinander ausgerichtet, dass sich die Kamerasichtfelder S1 und S2 symmetrisch überlappen, wie dies in Figur 6 dargestellt ist.

Die Belichtung der beiden Bildsensoren 1.11 und 1.21 einer solchen Stereokamera 1 erfolgt gemäß dieser Figur 6 zeilenweise, indem zunächst die Belichtung und das Auslesen mit der ersten Zeile ZE21 des größeren Bildsensors 1.21 beginnt und anschließend die Belichtung und das Auslesen des kleineren Bildsensors 1.11 erst dann beginnt, wenn der Belichtungsvorgang des größeren Bildsensors 1.21 die erste Zeile ZE11 des kleineren Bildsensors 1.11 erreicht hat.

Eine Erweiterung des Öffnungswinkels der rechten Kamera 1.2 gegenüber dem Öffnungswinkel der linken Kamera 1.1 kann auch sowohl in horizontaler als auch in vertikaler Richtung erfolgen. Dies führt dazu, dass der zweite Bildsensor 1.21 sowohl in horizontaler als auch in vertikaler Richtung größer ist als der erste Bildsensor 1.11. Auch für diesen Fall weisen die beiden Linsenoptiken 1.12 und 1.21 der linken und rechten Kamera 1.1 und 1.2 die im Zusammenhang mit den Figuren 3 und 4 beschriebenen Eigenschaften auf. Dabei sind die beiden Kameras 1.1 und 1.2 derart zueinander ausgerichtet, dass sich die Kamerasichtfelder S1 und S2 symmetrisch überlappen, wie dies in Figur 7 dargestellt ist.

Die Herstellung der Synchronität beim Belichten und Auslesen solcher Bildsensoren 1.1 und 1.2 ist aufwendiger, als bei den zuvor erläuterten Ausführungsbeispielen.

Zunächst beginnt der Belichtungs- und Auslesevorgang mit der ersten Zeile ZE21 des größeren Bildsensors 1.21 die erste Zeile ZE11 des kleineren Bildsensors 1.11 erreicht ist. Um die Synchronität zu sichern, müsste für jede Zeile des kleineren Bildsensors 1.11 eine Pause entsprechend der Anzahl der Auslesetakte der überzähligen Pixel in einer Zeile des größeren Bildsensors 1.21 eingefügt werden. Dies wird dadurch erreicht, dass beim kleineren Bildsensor 1.11 eine entsprechende Anzahl virtueller Spalten eingefügt werden, für die der Pixeltakt weiterlaufen kann, ohne dass beim kleineren Bildsensor 1.11 die Pixel dieser virtuellen Spalten verarbeitet werden müssten. Dadurch kann auf den Belichtungsstart der nachfolgenden Zeile gewartet werden und das gleichzeitige Starten der zeilenweise Belichtung sichergestellt werden.

### Bezugszeichen

- 1: Stereokamera
- 1.1: erste Kamera der Stereokamera 1
- 1.11: erster Bildsensor der ersten Kamera 1.1
- 1.12: erste Linsenoptik der ersten Kamera 1.1
- 1.13: Bildauswerteeinheit der ersten Kamera 1.1
- 1.2: zweite Kamera der Stereokamera 1
- 1.21: zweiter Bildsensor der zweiten Kamera 1.2
- 1.22: zweite Linsenoptik der zweiten Kamera 1.2
- 1.23: Bildauswerteeinheit der zweiten Kamera 1.1

- 2: Steuer- und Auswerteeinheit

- 10: Fahrzeug

- O: optische Achse
- O1: optische Achse der ersten Kamera 1.1
- O2: optische Achse der zweiten Kamera 1.2

- S1: Kamerasichtfeld der ersten Kamera 1.1
- S2: Kamerasichtfeld der zweiten Kamera 1.2

- SP11: erste Spalte des ersten Bildsensors 1.11
- SP21: erste Spalte des zweiten Bildsensors 1.21

- Z: Zentralbereich einer panomorphen Linse
- Z': ein den Zentralbereich umschließenden Bereich einer panomorphen Linse
- Z": ein den Zentralbereich umschließenden Bereich einer panomorphen Linse
- Z1: Zentralbereich der ersten Linsenoptik 1.12
- Z2: Zentralbereich der zweiten Linsenoptik 1.22

- ZE11: erste Zeile des ersten Bildsensors 1.11
- ZE21: erste Zeile des zweiten Bildsensors 1.21

- α1: Öffnungswinkel des Kamerasichtfeldes S1
- α11: Öffnungswinkel des Zentralbereiches Z1
- α2: Öffnungswinkel des Kamerasichtfeldes S2
- α21: Öffnungswinkel des Zentralbereiches Z2

## Patentansprüche

1. Stereokamera (1) für ein Fahrzeug (10) mit einer einen ersten Bildsensor (1.11) aufweisenden ersten Kamera (1.1), deren Kamerasichtfeld (S1) einen ersten Öffnungswinkel (α1) aufweist, und einer einen zweiten Bildsensor (1.21) aufweisenden zweiten Kamera (1.2), deren Kamerasichtfeld (S2) einen zweiten Öffnungswinkel (α2) aufweist, wobei der erste und der zweite Bildsensor (1.11, 1.21) mit identischen Pixeldichten ausgebildet ist und jeweils eine an den Öffnungswinkel (α1, α2) angepasste Größe aufweisen, wobei der zweite Öffnungswinkel (α2) in vertikaler und horizontaler Richtung größer ist als der erste Öffnungswinkel (α1), **dadurch gekennzeichnet, dass**
- die erste Kamera (1.1) eine erste Linsenoptik (1.12) und die zweite Kamera (1.2) eine zweite Linsenoptik (1.22) aufweist, wobei sowohl die erste als auch die zweite Linsenoptik (1.12, 1.22) mit einer im Winkelbereich(α11, α21) um die optische Achse (O1) liegenden Zentralbereich (Z1, Z2) des Kamerasichtfeldes (S1, S2) höheren Winkelauflösung ausgebildet ist als außerhalb des Zentralbereichs (Z1, Z2), und
- die erste und zweite Kamera (1.1, 1.2) derart zueinander angeordnet sind, dass sich deren Kamerasichtfelder (S1, S2) symmetrisch überlappen, wobei die erste Kamera (1.1) eine Bildauswerteeinheit (1.13) und die zweite Kamera (1.2) eine Bildauswerteeinheit (1.23) aufweist und wobei die Bildauswerteeinheiten (1.13, 1.23) die Bildsensoren (1.11, 1.21) derart ansteuern, dass ein Belichten und Auslesen der Bildsensorpixel des ersten und zweiten Bildsensors (1.11, 1.21) zeilenweise durchgeführt wird, indem nach einem Belichtungsstart des größeren Bildsensors (1.21) die Belichtung des kleineren Bildsensors (1.11) beginnt, wenn bei dem größeren Bildsensor (1.21) die erste Zeile des kleineren Bildsensors (1.11) erreicht wird, wobei für den kleineren Bildsensor (1.11) in horizontaler Richtung randseitig jeweils virtuelle Spalten bis zur Übereinstimmung mit der Spaltenzahl des größeren Bildsensor (1.21) erzeugt werden.

2. Stereokamera (1) nach Anspruch 1, **dadurch gekennzeichnet, dass** die erste und zweite Linsenoptik (1.12, 1.22) jeweils im Zentralbereich (Z1, Z2) mit einer gegenüber außerhalb des Zentralbereichs (Z1, Z2) doppelten Auflösung ausgebildet ist.

3. Verfahren zur Belichtungssteuerung einer Stereokamera (1) für ein Fahrzeug (10), wobei die Stereokamera (1) gemäß Anspruch 1 ausgestaltet ist.

4. Verwendung der Stereokamera (1) nach einem der Patentansprüche 1 bis 2 für ein Fahrerassistenzsystem (2) in einem Fahrzeug (10).

## Claims

1. Stereo camera (1) for a vehicle (10) comprising a first camera (1.1), which has a first image sensor (1.11) and the camera field of view (S1) of which has a first aperture angle (α1), and a second camera (1.2), which has a second image sensor (1.21) and the camera field of view (S2) of which has a second aperture angle (α2), wherein the first and second image sensors (1.11, 1.21) are configured with identical pixel densities and each have a size adapted to the aperture angle (α1, α2), wherein the second aperture angle (α2) is greater than the first aperture angle (α1) in the vertical and horizontal directions, **characterized in that**
- the first camera (1.1) has a first lens optical unit (1.12) and the second camera (1.2) has a second lens optical unit (1.22), wherein both the first lens optical unit (1.12) and the second lens optical unit (1.22) are configured with an angular resolution that is higher in a central region (Z1, Z2) of the camera field of view (S1, S2) lying in the angular range (α11, α21) around the optical axis (O1) by comparison with outside the central region (Z1, Z2), and
- the first and second cameras (1.1, 1.2) are arranged in relation to one another such that their camera fields of view (S1, S2) overlap symmetrically, wherein the first camera (1.1) has an image evaluation unit (1.13) and the second camera (1.2) has an image evaluation unit (1.23) and wherein the image evaluation units (1.13, 1.23) control the image sensors (1.11, 1.21) such that the image sensor pixels of the first and second image sensors (1.11, 1.21) are exposed and read out line by line by a procedure in which, after a start of exposure of the larger image sensor (1.21), the exposure of the smaller image sensor (1.11) begins when the first line of the smaller image sensor (1.11) is reached in the case of the larger image sensor (1.21), wherein virtual columns are in each case generated marginally in the horizontal direction for the smaller image sensor (1.11) until there is matching correspondence with the number of columns of the larger image sensor (1.21).

2. Stereo camera (1) according to Claim 1, **characterized in that** the first and second lens optical units (1.12, 1.22) are each configured with double the resolution in the central region (Z1, Z2) by comparison with outside the central region (Z1, Z2).

3. Method for controlling the exposure of a stereo camera (1) for a vehicle (10), wherein the stereo camera (1) is embodied according to Claim 1.

4. Use of the stereo camera (1) according to either of Patent Claims 1 and 2 for a driver assistance system (2) in a vehicle (10).

## Revendications

1. Caméra stéréoscopique (1) pour un véhicule (10), comprenant une première caméra (1.1) qui possède un premier capteur d'images (1.11), dont le champ de vision de caméra (S1) présente un premier angle d'ouverture (a1), et une deuxième caméra (1.2) qui possède un deuxième capteur d'images (1.21), dont le champ de vision de caméra (S2) présente un deuxième angle d'ouverture (a2), le premier et le deuxième capteur d'images (1.11, 1.21) étant configurés avec des densités de pixels identiques et possédant respectivement une taille adaptée à l'angle d'ouverture (a1, a2), le deuxième angle d'ouverture (a2) étant plus grand que le premier angle d'ouverture (a1) dans la direction verticale et horizontale, **caractérisée en ce que**
- la première caméra (1.1) possède une première optique à lentilles (1.12) et la deuxième caméra (1.2) une deuxième optique à lentilles (1.22), la première ainsi que la deuxième optique à lentilles (1.12, 1.22) étant configurée avec une résolution angulaire qui est plus grande dans une zone centrale (Z1, Z2) du champ de vision de caméra (S1, S2) se trouvant dans la plage angulaire (a11, a21) autour de l'axe optique (O1) qu'en-dehors de la zone centrale (Z1, Z2), et
- la première et la deuxième caméra (1.1, 1.2) sont disposées l'une par rapport à l'autre de telle sorte que leurs champs de vision de caméra (S1, S2) se chevauchent de manière symétrique, la première caméra (1.1) possédant une unité d'interprétation d'image (1.13) et la deuxième caméra (1.2) une unité d'interprétation d'image (1.23) et les unités d'interprétation d'image (1.13, 1.23) commandant les capteurs d'images (1.11, 1.21) de telle sorte qu'une exposition et une lecture des pixels de capteur d'image des premier et deuxième capteurs d'images (1.11, 1.21) étant effectuées ligne par ligne en commençant l'exposition du plus petit capteur d'images (1.11) après un début d'exposition du plus grand capteur d'images (1.21) lorsque la première ligne du plus petit capteur d'images (1.11) est atteinte au niveau du plus grand capteur d'images (1.21), des colonnes virtuelles étant respectivement générées pour le plus petit capteur d'images (1.11) du côté du bord dans la direction horizontale jusqu'à la concordance avec le nombre de colonnes du plus grand capteur d'images (1.21).

2. Caméra stéréoscopique (1) selon la revendication 1, **caractérisée** en la première et la deuxième optique à lentille (1.12, 1.22) sont configurées respectivement dans la zone centrale (Z1, Z2) avec une résolution double par rapport à en-dehors de la zone centrale (Z1, Z2).

3. Procédé de commande d'exposition d'une caméra stéréoscopique (1) pour un véhicule (10), la caméra stéréoscopique (1) étant configurée selon la revendication 1.

4. Utilisation de la caméra stéréoscopique (1) selon l'une des revendications 1 à 2 pour un système d'assistance au conducteur (2) dans un véhicule (10).
